# EUROPÄISCHE PATENTSCHRIFT

(11) **EP 3 710 229 B1**
(45) Veröffentlichungstag und Bekanntmachung des Hinweises auf die Patenterteilung: **29.04.2026**
(21) Anmeldenummer: 18796471.3
(22) Anmeldetag: 08.11.2018
(51) Int. Cl.: B29C 64/245, B29C 64/153, B33Y 30/00, B33Y 10/00, B23P 11/02, B22F 3/105, B23H 11/00

(54) **TRÄGERSYSTEM FÜR EINE FERTIGUNGSANLAGE UND KORRESPONDIERENDES VERFAHREN**
SUPPORT SYSTEM FOR A TRANSPORT SYSTEM AND CORRESPONDING METHOD
SYSTÈME PORTEUR POUR UNE INSTALLATION DE FABRICATION ET PROCÉDÉ CORRESPONDANT

(30) Priorität: 13.11.2017 EP 17201412
(43) Veröffentlichungstag der Anmeldung: 23.09.2020
(73) Patentinhaber: CADS ADDITIVE GmbH, 4320 Perg (AT); Peter Lehmann AG, 3552 Bärau (CH)
(72) Erfinder: STADLMAYR, Daniel, 4320 Perg (AT); HOELLER, Wolfgang, 4320 Perg (AT); HULLIGER, Urs, 3552 Baerau (CH)
(74) Vertreter: AMMANN PATENTANWÄLTE AG
(86) Internationale Anmeldenummer: PCT/EP2018/080600
(87) Internationale Veröffentlichungsnummer: WO 2019/092098

(56) Entgegenhaltungen:
- EP-A2- 1 614 501
- WO-A1-2016/184994
- US-A1- 2014 191 439
- US-A1- 2015 335 434

## Beschreibung

Die vorliegende Erfindung betrifft ein Trägersystem für eine Fertigungsanlage gemäss Oberbegriff des Anspruchs 1 mit Werkstückträger. Des Weiteren betrifft sie ein Verfahren zum Herstellen eines Werkstücks.

Bei der additiven Fertigung, die auch mit dem Stichwort "3D-Printing" bezeichnet wird, wird ein Werkstück schrittweise aus einem Baumaterial aufgebaut. In einer Variante wird dazu auf einer Bauplattform ("Bühne") schichtweise ein Pulver aus dem Baumaterial aufgetragen. Das Pulver wird durch Energieeintrag kontrolliert geschmolzen. Nach Verfestigung der geschmolzenen Bereiche wird dieser Ablauf wiederholt, und zwar so oft, bis das Werkstück fertiggestellt ist. Der Energieeintrag erfolgt z. B. durch gezielte Bestrahlung mit elektromagnetischer Strahlung, insbesondere mittels Laser, oder Teilchenstrahlung. Das schichtweise Auftragen des Pulvers wird beispielsweise durch schrittweises Absenken der Bauplattform in einem Bauzylinder bewirkt. Eine solche Vorrichtung ist z. B. aus der EP-A-2 386 404 bekannt.

Für eine präzise, qualitativ hochwertige Herstellung muss der Pulverauftrag gleichmäßig und dicht erfolgen. Insbesondere ist zu vermeiden, dass während des Fertigungsverfahrens das Baumaterial lokal absackt. Eine mögliche Ursache hierfür sind kleine Hohlräume, die während des Prozesses kollabieren. Unregelmäßigkeiten in der jeweils obersten Pulverschicht führen zu Strukturfehlern im hergestellten Werkstück.

Ein weiterer Aspekt beim genannten Herstellungsverfahren ist eine einwandfreie Abdichtung der Bauplattform gegenüber dem Bauzylinder, um Verlust von Baumaterial durch ein Leck in dieser Abdichtung in den Raum unterhalb der Bauplattform zu vermeiden. Ein solcher Materialfluss könnte auch zu den unerwünschten Unebenheiten in den aufgebrachten Baumaterialschichten führen.

Eine weite Spanne von Baumaterial wird bei den additiven Fertigungsverfahren eingesetzt. Insbesondere bekannt sind schmelzbare oder teilweise schmelzbare Materialien wie Polymere, insbesondere thermoplastische Polymere, metallische Pulver, Keramikpulver.

Nach Abschluss eines Fertigungsverfahrens und Entfernen des überflüssigen Baumaterials ist das Werkstück an den Kontaktflächen fest und oft auch über Stützstrukturen mit der Bauplattform verbunden. Die Stützstrukturen dienen dazu, die Lage des Werkstücks während der Fertigung zu stabilisieren und entstandene Wärme in die Bauplattform abzuleiten.

Oft ist ein solches, in einem additiven Fertigungsverfahren hergestelltes Werkstück in einem Zustand, dass weitere Bearbeitungsschritte folgen müssen, z. B. thermische Behandlungen und solche der spanenden (d. h. materialabhebenden bzw. subtraktiven) Fertigung. Dazu ist es nötig, das Werkstück von der Bauplattform zu entfernen, um es den weiteren Bearbeitungsschritten unterziehen zu können. Da die Bauplattform ein integraler Bestandteil der additiven Herstellungsvorrichtung ist und von dieser nur umständlich entfernt werden kann, muss die Entfernung des Werkstücks von der Plattform am Ort geschehen, was aufwändig ist und in der Regel manuell erfolgen muss. Außerdem wird eine Mehrzahl Gegenstände gleichzeitig hergestellt (bspw. bis zu 100), wodurch der Zugang zu den einzelnen Werkstücken während des Abnehmens erschwert ist.

WO-A-2016/184994 offenbart den Oberbegriff des Anspruchs 1 und bezieht sich auf eine Vorrichtung der additiven Fertigung, bei dem ein Gegenstand durch gezieltes Vernetzen in einem Bad vernetzbarer Flüssigkeit auf einer Bauplattform hergestellt wird, der sich gegen die Schwerkraft nach oben bewegt. In einer Ausführung ist angegeben, dass die Bauplattform an sich bewegenden Teile angebracht ist, aber weder werden die oben genannten Anforderungen für einen einfachen Transport angesprochen noch auch nur erwähnt, dass die Anbringung lösbar ist.

EP-A-1 614 501 bezieht sich auf eine Werkzeugaufnahme an einer Werkzeugmaschine, die durch Erwärmen gelöst wird. Das Erwärmen erfolgt induktiv durch ein Wechselmagnetfeld.

US-A-2014/191439 betrifft ein System der additiven Fertigung, in dem das Abwechseln zwischen Materialauftrag bzw. Vorschub der Bühne und dem Ausbilden des Werkstücks dadurch vermieden wird, das längs eine spiralförmigen Oberfläche gearbeitet wird. In einer Ausführungsform wird das Integrieren anderer, auch subtraktive Bearbeitungseinrichtungen in die Anlage der additiven Fertigung vorgeschlagen.

US-A-2015/335434 betrifft ein Herstellungsverfahren durch Kombinieren von additiver und subtraktiver Herstellung, um makellose Oberflächen ohne Schichten zu erhalten, je nach Bedarf auch eine strukturierte, bioaktive Oberfläche durch zusätzliche additive Fertigungsschritte.

Aus der spanenden Fertigung (Drehen, Fräsen, Schleifen usw.) ist es bekannt, auf einer Grundplatte auswechselbare Werkstückträger, sogenannte Paletten, anzuordnen. Die Paletten sind mit passenden Befestigungsvorrichtungen für die Werkstücke versehen, neuerdings auch mit sogenannten Nullpunkt-Spannsystemen, bei denen eine Verschiebung durch thermische Ausdehnung und eine mechanische Beanspruchung der Palette während der Bearbeitung relativ zum Zentrum der Palette vermieden wird. Die Paletten werden mit aktiven Befestigungsvorrichtungen auf dem Grundträger arretiert, um den Belastungen während der spanenden Bearbeitung standzuhalten.

Diese Art Paletten ist jedoch nicht für die additiven Fertigungsverfahren einsetzbar, insbesondere nicht für diejenigen, die schichtweise aufgetragenes Pulver verwenden. Namentlich erfüllen sie nicht die besonderen Anforderungen, nämlich Kompatibilität mit dem Baumaterial, so dass das Werkstück auf der Oberfläche aufgebaut werden kann, hohlraumfreie Umhüllung mit Pulver bei gleichzeitig maximaler Ausnützung der Fläche, da in der additiven Fertigung einerseits mehrere Werkstücke gleichzeitig gefertigt werden können, andererseits eine hohe Anzahl gleichzeitig gefertigter Werkstücke wegen des hohen Zeitbedarfs ein entscheidender Faktor für die Rentabilität ist, und Formstabilität bei Erwärmung, da sich eine Deformation der Baufläche bei der additiven Fertigung wegen der direkten Verbindung mit dem Werkstück direkt auf dieses überträgt.

Eine Aufgabe der vorliegenden Erfindung besteht daher darin, eine Lösung in Form eines Trägersystems, eines Werkstückträgers und zugehöriger Verfahren anzugeben, welche einen rationelleren Transfer des Werkstücks aus der Herstellungsvorrichtung der additiven Fertigungen in ein nachfolgendes Bearbeitungsverfahren, insbesondere der subtraktiven Nachbearbeitung (z. B. der spanenden Fertigung) oder der thermischen Nachbehandlung, gestattet.

Ein derartiges Trägersystem ist im Anspruch **1** angegeben. Der Anspruch 14 definiert ein entsprechendes Verfahren zum Herstellen eines Werkstücks. Die weiteren Ansprüche geben bevorzugte Ausführungsformen und eine Herstellungsvorrichtung an. Zahlenangaben in der folgenden Beschreibung und in den Ansprüchen sind mit den jeweils gängigen Toleranzen zu verstehen.

Gemäß einem ersten Aspekt wird ein Trägersystem für eine Fertigungsanlage und ein Werkstückträger für ein solches Trägersystem bereitgestellt. Das Trägersystem umfasst einen Grundträger (oder Grundplatte), welcher dazu eingerichtet ist, in einer Prozesskammer der Fertigungsanlage befestigt zu werden, und welcher mindestens ein Positionierungselement umfasst, und einen Werkstückträger, auf dem nach einem Herstellungsverfahren umfassend schichtweises Auftragen eines pulverförmigen Rohmaterials ein Werkstück herstellbar ist. Der Werkstückträger weist eine Unterseite und eine der Unterseite im Wesentlichen gegenüberliegende Bauseite als Oberseite auf. Der Werkstückträger weist an seiner Unterseite mindestens eine erste Positionierungseinrichtung zur positionsgenauen, lösbaren Anbringung an dem Grundträger der Herstellungsvorrichtung auf. Das mindestens eine Positionierungselement und die mindestens eine erste Positionierungseinrichtung sind komplementär ausgebildet und bilden ein Zapfen-Loch-Paar. Mindestens ein Abschnitt des Zapfens ist aus einem ersten Material mit einem ersten Wärmeausdehnungskoeffizient gebildet und das Loch ist in einem für die Positionsgenauigkeit maßgebenden Abschnitt aus einem zweiten Material mit einem zweiten Wärmeausdehnungskoeffizient gebildet. In einer ersten Alternative ist der zweite Wärmeausdehnungskoeffizient geringer als der erste Wärmeausdehnungskoeffizient, sodass bei einer Erhöhung einer Temperatur des Trägersystems während des Herstellungsverfahrens durch Ausdehnung des Abschnitts des Zapfens eine Klemmwirkung zwischen Zapfen und dem umgebenden Loch auftritt. In einer zweiten Alternative ist der erste Wärmeausdehnungskoeffizient geringer ist als der zweite Wärmeausdehnungskoeffizient, sodass bei einer Erhöhung einer Temperatur des Trägersystems während des Herstellungsverfahrens durch Ausdehnung des Halterungsabschnitts des Lochs eine Klemmwirkung zwischen Zapfen und dem umgebenden Loch auftritt.

Bei der Fertigungsanlage kann es sich beispielsweise um eine Herstellungsvorrichtung der additiven Art (beispielsweise zum selektiven Laserschmelzen) handeln. Ebenso kann es sich bei der Fertigungsanlage um eine Fertigungsanlage der thermischen Nachbearbeitung eines Werkstücks oder um eine Fertigungsanlage zur subtraktiven (z. B. spanenden) Fertigung handeln. Bei der Prozesskammer kann es sich um einen Raum der Fertigungsanlage handeln, in welchem ein jeweiliger Fertigungsprozess (z. B. additive Fertigung) stattfindet. Insbesondere kann der Grundträger als Teil einer Bauplattform der Fertigungsanlage vorgesehen sein. Der Grundträger kann Befestigungsmittel umfassen, welche dazu geeignet sind, den Grundträger an einer Basisplatte der Fertigungsanlage zu befestigen. Bei den Befestigungsmitteln kann es sich beispielsweise um Löcher, Stifte und/oder Schrauben handeln. Insbesondere kann der Grundträger dazu eingerichtet sein, mit einer Basisplatte der Fertigungsanlage verschraubt zu werden.

Das Herstellungsverfahren kann beispielsweise selektives Laserschmelzen oder selektives Lasersintern umfassen. Bei dem pulverförmigen Rohmaterial kann es sich um ein Metallpulver handeln. Unterseite und Oberseite des Werkstückträgers können als im Wesentlichen ebene Oberflächen des Werkstückträgers bereitgestellt sein und gegenüberliegende Seiten des Werkstückträgers definieren. Die Bauseite kann dazu geeignet sein, darauf ein Werkstück nach dem Verfahren umfassend schichtweises Auftragen eines pulverförmigen Rohmaterials herzustellen. Die erste Positionierungseinrichtung kann einen kreisförmigen oder kann einen von einer Kreisform abweichenden Querschnitt aufweisen. Es können mehrere erste Positionierungseinrichtungen (beispielsweise in Form einer Anordnung von Positionierungseinrichtungen) an dem Werkstückträger vorgesehen sein. Ferner können mehrere Positionierungselemente (beispielsweise in Form einer Anordnung von Positionierungselementen) an dem Grundträger vorgesehen sein. Eine Anzahl an Positionierungseinrichtungen kann von einer Anzahl von Positionierungselementen abweichen. Dass das Positionierungselement und die erste Positionierungseinrichtung als Zapfen-Loch-Paar ausgebildet sind, kann bedeuten, dass entweder das Positionierungselement als Zapfen und die erste Positionierungseinrichtung als Loch ausgebildet sind oder dass das Positionierungselement als Loch und die erste Positionierungseinrichtung als Zapfen ausgebildet sind. Anders ausgedrückt ist das Zapfen-Loch-Paar so ausgestaltet, dass entweder der Grundträger den Zapfen und der Werkstückträger das Loch oder der Grundträger das Loch und der Werkstückträger den Zapfen umfasst. In einem Fall, in dem mehrere Zapfen-Loch-Paare vorgesehen sind, kann der Grundträger sowohl Zapfen als auch Löcher und der Werkstückträger zugehörige Löcher und Zapfen umfassen. Dass das Positionierungselement und die erste Positionierungseinrichtung komplementär ausgebildet sind, kann bedeuten, dass ein Querschnitt des Positionierungselements im Wesentlichen einem Querschnitt der ersten Positionierungseinrichtung entspricht. Anders ausgedrückt kann der Zapfen im Wesentlichen ohne Spiel von dem Loch aufgenommen werden.

Bei dem mindestens einen Abschnitt des Zapfens kann es sich um einen Positionierungsring handeln. Der Positionierungsring kann im Wesentlichen ringförmig ausgebildet sein. Der Positionsring kann beispielsweise in Form eines scheibenförmigen Rings vorgesehen sein. Eine Dicke des Positionierungsrings kann beispielsweise konstant sein. Der mindestens eine Abschnitt des Zapfens kann auch in Form eines Zylinders bereitgestellt sein. Bei dem Wärmeausdehnungskoeffizient kann es sich um einen Längenausdehnungskoeffizient oder um einen Raumausdehnungskoeffizient handeln. Die Klemmwirkung kann gemäß der ersten Alternative beispielsweise so erzielt werden, dass sich der Abschnitt des Zapfens in radiale Richtung des Zapfens ausdehnt und somit einen Kraftschluss und Formschluss zwischen Zapfen und Loch bewirkt. Die Klemmwirkung kann gemäß der zweiten Alternative beispielsweise so erzielt werden, dass sich der Halterungsabschnitts des Lochs in (negative) radiale Richtung des Lochs, also zum Zapfen hin, ausdehnt und somit einen Kraftschluss und Formschluss zwischen Zapfen und Loch bewirkt.

Beispielsweise kann ein Formschluss in Richtungen parallel zu der Oberseite und der Unterseite bewirkt werden und ein Kraftschluss in eine Richtung senkrecht zur Oberseite und zur Unterseite. Bei einer Abkühlung des Trägersystems kann sich die Klemmwirkung wieder lösen.

Der Werkstückträger kann ein plattenförmiges oberes Element und ein plattenförmiges unteres Element umfassen. Das obere Element kann die Oberseite umfassen und das untere Element kann die Unterseite umfassen. Das obere Element kann aus einem anderen Material gebildet sein als das untere Element.

Das untere Element wird im Folgenden auch als Unterteil bezeichnet und das obere Element wird im Folgenden auch als Oberteil bezeichnet. Zwischen Oberseite und Unterseite des Werkstückträgers kann sich eine Grenzfläche zwischen dem oberen Element und dem unteren Element befinden. Das obere Element und das untere Element können sich flächig an dieser Grenzfläche kontaktieren. Es können jedoch auch ein Hohlraum oder mehrere Hohlräume zwischen dem oberen Element und dem unteren Element vorgesehen sein.

Das obere Element und das untere Element sind jeweils plattenförmig ausgebildet. Hierbei können das obere Element und das untere Element an einer Grenzfläche der beiden Elemente eine identische Querschnittsfläche aufweisen (beispielsweise eine im Wesentlichen rechteckige Querschnittsfläche). Das obere Element ist aus einem anderen Material gebildet als das untere Element. Beispielsweise kann das obere Element aus einem Material gebildet sein, welches geeignet ist, um darauf ein Werkstück mithilfe des Herstellungsverfahrens herzustellen, insbesondere mithilfe eines (selektives Laserschmelzen)-Verfahrens. Das obere Element kann beispielsweise aus Aluminium oder einer Aluminiumlegierung gebildet sein. Das untere Element kann aus einem warmfesten Material gebildet sein. Das untere Element kann beispielsweise aus einem Werkzeugstahl gebildet sein.

Das untere Element und das obere Element können lösbar miteinander verbunden sein. Beispielsweise können das untere und das obere Element miteinander verschraubt sein. Die beiden Elemente können beispielsweise auch mithilfe anderer lösbarer Befestigungsvorrichtungen miteinander verbunden, sein, z. B. mithilfe von Zapfen bzw. Stiften und zugehörigen Löchern oder mithilfe von Klemmen.

Ausgehend von der Oberseite kann mindestens ¼ der Höhe des Werkstückträgers das obere Element bilden und ausgehend von der Unterseite bis höchstens zum oberen Element kann sich das untere Element erstrecken, in welchem zumindest ein Teil der ersten Positionierungseinrichtung z. B. in Form eines Lochs ausgebildet ist. Das obere Element kann beispielsweise höchstens ¾ der Höhe des Werkstückträgers bilden, z. B. etwa die Hälfte der Höhe des Werkstückträgers.

Das zweite Material kann wenigstens eine der beiden folgenden Eigenschaften aufweisen:
- warmfest bis 550 °C,
- Härte im Bereich von 45 bis 68 HRC (Härte Rockwell C).

Das zweite Material kann ferner warmfest bis 1000 °C sein. Die Härte des zweiten Materials kann beispielsweise in einem Bereich von 50 bis 55 HRC liegen. Bei dem Material kann es sich um Werkzeugstahl handeln. Beispielsweise kann das gesamte untere Element aus dem Material bestehen, aus dem die ersten Positionierungseinrichtungen in dem für die Positionsgenauigkeit maßgebenden Halterungsabschnitt bestehen.

Die erste Positionierungseinrichtung kann im Wesentlichen ein Loch sein und der Halterungsabschnitt des Lochs kann im Wesentlichen einen ringförmigen Teil der Innenwand des Lochs darstellen. Der Halterungsabschnitt kann mindestens einen pro Loch eingepressten oder eingeschraubten Ring umfassen.

In dem Fall, dass der Halterungsabschnitt einen eingepressten oder eingeschraubten Ring umfasst, kann beispielsweise der Ring aus dem zweiten Material und der restliche Werkstückträger aus einem anderen Material gebildet sein. Das andere Material kann beispielsweise ein Material sein, welches dazu geeignet ist, darauf ein Werkstück mit dem Herstellungsverfahren herzustellen.

Zweite Positionierungseinrichtungen können am oberen Element und am unteren Element vorhanden sein und komplementär zueinander ausgebildet sein, um das obere Element und das untere Element positionsgenau aneinander befestigen zu können. Die zweiten Positionierungseinrichtungen können einen Satz von wenigstens zwei Löchern umfassen mit einem ersten Loch und mindestens einem zweiten Loch, wobei das zweite Loch als Langloch ausgeführt ist, so dass ein darin eingeführter Positionierungsbolzen der zweiten Positionierungseinrichtungen in wenigstens eine Richtung verschiebbar ist, um eine thermische Größenänderung des oberen Elements in Bezug auf das untere Element auszugleichen. Hierbei kann sich das Langloch in eine Richtung erstrecken, welche im Wesentlichen einer Verbindungsrichtung des ersten und des zweiten Lochs entspricht.

Die erste Positionierungseinrichtung kann ein Loch mit einem kreisförmigen Querschnitt, wobei eine zweite, exzentrisch angeordnete Vertiefung im Werkstückträger vorhanden ist, oder ein Loch mit einem elliptischen, ovalen oder polygonalen Querschnitt darstellen, sodass der Werkstückträger bei Anordnung auf dem Grundträger mit mindestens einem komplementär ausgebildeten Positionierungselement nicht verdrehbar ist. Insbesondere soll der Werkstückträger in Bezug auf den Grundträger nicht parallel zu der Oberseite und der Unterseite des Werkstückträgers verdreht werden können. Hierfür kann beispielsweise ein polygonaler Querschnitt der ersten Positionierungseinrichtung vorteilhaft sein.

Randflächen des Werkstückträgers zwischen der Unterseite und der Oberseite können geneigt sein, sodass sich der Werkstückträger von der Unterseite zur Oberseite hin verjüngt. Durch die geneigten Randflächen kann gewährleistet werden, dass ein Verklumpen von pulverförmigem Baumaterial durch Zusammenpressen durch thermische Ausdehnung des Werkstückträgers vermieden wird. Ferner kann die Gefahr einer Ausbildung von Hohlräumen in einem auf dem Werkstückträger aufgebrachten pulverförmigen Baumaterial vermieden werden. Die Neigung der Randflächen kann beispielsweise 1° bis 11°, insbesondere 3° bis 9°, weiter insbesondere 5° bis 7° und beispielsweise 6° betragen.

Mindestens eine Randfläche des Werkstückträgers kann wenigstens ein Greifmittel in Form einer Nut oder einer Rippe aufweisen. Das Greifmittel kann von oben nach unten verlaufen, d. h. von der Oberseite zur Unterseite. Das Greifmittel kann dazu eingerichtet sein, dass eine Greifvorrichtung am Greifmittel angreifen kann und an ihr festmachbar ist, insbesondere durch Reib- und/oder Formschluss, um den Werkstückträger bewegen zu können.

Das Greifmittel kann in Form einer Nut mit einem schwalbenschwanzförmigen Querschnitt ausgebildet sein. Seitenwände des Greifmittels können jeweils einen Hinterschnitt von 10° bis 40° und insbesondere von 15° bis 20° aufweisen.

Das mindestens eine Positionierungselement kann einen Zapfen umfassen und die mindestens eine Positionierungseinrichtung kann ein Loch umfassen, wobei das untere Element aus dem zweiten Material gebildet ist. Bei dem zweiten Material des unteren Elements kann es sich um Werkzeugstahl handeln.

Gemäß einem zweiten Aspekt wird eine Herstellungsvorrichtung der additiven Art nach einem Herstellungsverfahren umfassend schichtweises Auftragen eines pulverförmigen Rohmaterials mit einer Baubühne und einem Trägersystem gemäß dem ersten Aspekt bereitgestellt, wobei die Baubühne der Herstellungsvorrichtung den Grundträger des Trägersystems umfasst. Der Grundträger kann beispielsweise auf eine Basisplatte aufgeschraubt sein, sodass der Grundträger einen Teil der Baubühne der Herstellungsvorrichtung darstellt.

Der Grundträger kann eine Anordnung von Positionierungselementen umfassen, wobei die Anordnung von Positionierungselementen die Zapfen mit einem kreisförmigen Querschnitt und zusätzliche Verdrehsicherungsstifte aufweist. Alternativ können die Zapfen einen elliptischen, ovalen oder polygonalen Querschnitt aufweisen, sodass der Werkstückträger bei Anordnung auf dem Grundträger nicht verdrehbar ist. Insbesondere kann der Werkstückträger nicht in Richtungen parallel zur der Oberseite und der Unterseite des Werkstückträgers verdrehbar sein.

Gemäß einem dritten Aspekt wird ein Verfahren zum Herstellen eines Werkstücks bereitgestellt. Das Verfahren umfasst Anordnen des Werkstückträgers des Trägersystems gemäß dem ersten Aspekt auf dem Grundträger des Trägersystems in einer Herstellungsvorrichtung der additiven Art, wobei das mindestens eine Positionierungselement einen Zapfen umfasst und die mindestens eine Positionierungseinrichtung ein Loch umfasst und wobei der Zapfen in das Loch eingreift. Das Verfahren umfasst ferner Durchführen einer additiven Fertigung eines Werkstücks auf dem Werkstückträger durch die Herstellungsvorrichtung, wobei sich die Temperatur des Trägersystems während des Herstellungsverfahrens erhöht und durch Ausdehnung des Abschnitts des Zapfens oder durch Ausdehnung des Halterungsabschnitts des Lochs eine Klemmwirkung zwischen Zapfen und dem umgebenden Loch auftritt, Abkühlen des Trägersystems, wobei sich die Klemmwirkung wieder löst; Lösen des Werkstückträgers zusammen mit dem darauf gefertigten Werkstück von dem Grundträger; und Anordnen des Werkstückträgers auf einem Träger einer Anlage zur subtraktiven Nachbearbeitung des Werkstücks, wobei ein Zapfen des Trägers in das Loch des Werkstückträgers eingreift.
beispielsweise um eine Wärmenachbearbeitung handeln. Das Material des unteren Elements des Werkstückträgers kann warmfest in Bezug auf die von der Anlage generierte Hitze sein. Auch bei der thermischen Nachbearbeitung kann die oben beschriebene Klemmwirkung zwischen dem Loch des Werkstückträgers und einem Zapfen eines Grundträgers der Anlage zur thermischen Nachbearbeitung genutzt werden.

Der Schritt des Lösens kann umfassen: Greifen des Werkstückträgers mit einem Greifer an einem Greifmittel, welches an einer Randfläche des Werkstückträgers angeordnet ist. Bei dem Greifmittel kann es sich beispielsweise um eine schwalbenschanzförmige Nut handeln.

Mehrere Werkstückträger können nebeneinander, möglicherweise mit Abstand, auf dem Grundträger der Herstellungsvorrichtung angeordnet sein. Die Anordnung kann beispielsweise so ausgestaltet sein, dass eine gesamte Fläche des Grundträgers von Werkstückträgern bedeckt ist. In einem Herstellungsprozess kann beispielsweise auf jedem der Werkstückträger ein Werkstück hergestellt werden.

Weitere bevorzugte Ausbildungen sind wie folgt:
Wie oben geschildert können sich Werkstückträger gemäß dem ersten Aspekt dadurch auszeichnen, dass sie wenigstens an der Fläche, auf der per additiver Fertigung ein Werkstück erzeugt wird, aus einem Material bestehen, auf dem dies möglich ist. Im einfachsten Fall besteht die Oberfläche im Wesentlichen aus dem zur Fertigung verwendeten Material.

Für die Anbringung auf einer entsprechend ausgestatteten Grundplatte in der Fertigungsvorrichtung können die Werkstückträger gemäß dem ersten Aspekt an ihrer Unterseite über entsprechende Positionierungseinrichtungen, bevorzugt Löcher, verfügen. Damit kann der Werkstückträger auf der Grundplatte angeordnet werden, die zu der Positionierungseinrichtung komplementäre Positionierungseinrichtungen, bevorzugt Zapfen, aufweist.

In einer bevorzugten Ausführung besteht ein funktional wesentlicher Teil der Positionierungseinrichtungen am Werkstückträger aus einem Material, das warmfest (z. B. bis 500 °C) und/oder härtbar oder gehärtet ist. Dadurch kann der Werkstückträger mit dem Werkstück einer Wärmebehandlung ausgesetzt werden bzw. der Beanspruchung durch die Aufspannung während einer spanenden oder materialabhebenden Bearbeitung standhalten. Ein geeignetes Material ist Werkzeugstahl.

Warmfestigkeit bedeutet, dass bei einer vorgegebenen höheren Temperatur (z. B. 500 °C oder 900 °C) noch für die jeweilige Anwendung genügende mechanische Eigenschaften vorhanden sind, insbesondere die Festigkeit. Als Parameter für die Warmfestigkeit kann die 0,2 %-Dehngrenze herangezogen werden, also die Spannung, die eine reversible Dehnung von 0,2 % hervorruft. Als Grenze für Warmfestigkeit kann eine 0,2 %-Dehngrenze von mindestens 10 MPa, besser 20 MPa oder auch höher, je nach Anforderungen, wie 30 MPa oder 40 MPa angesehen werden.

Bei den Positionierungseinrichtungen kann es sich um Einsätze handeln, die in Löcher im Körper des Werkstückträgers eingedreht oder eingepresst sind.

In einer besonders bevorzugten Ausführung bestehen ein Oberteil (oberes Element) eines Werkstückträgers aus einem Material, das kompatibel mit der additiven Fertigung ist, und ein Unterteil (unteres Element) aus einem für die Positionierungszwecke passend gewählten Material, bevorzugt einem Werkzeugstahl.

Für eine gleichmäßige, dichte und hohlraumfreie Beschichtung mit Pulver, das für die additive Fertigung eingesetzt wird, sind in einer bevorzugten Ausführung die Kanten der Werkstückträger abgeschrägt, so dass diese insgesamt die Form eines Pyramidenstumpfes aufweisen. Durch die nach oben, das heißt von der Grundplatte weg, sich verjüngende Form ergibt sich eine dichte Pulverbeschichtung. Bei entsprechend gewählten Winkeln der Seitenfläche ergibt sich der weitere Vorteil, dass bei Dimensionsänderungen in Folge einer Temperaturänderung, namentlich einer Ausdehnung, das Pulver zwischen nebeneinander liegenden Werkstückträgern oder zwischen Werkstückträger und Bauzylinder nach oben ausweichen kann.

Ein Problem bei der nach oben verjüngten Form der Werkstückträger besteht darin, dass sie nicht mehr durch normale Greifer gepackt werden können, da diese weder an den Seitenwänden Halt finden noch unter den Werkstückträgern einhaken können. Eine bevorzugte Lösung dieses Problems besteht darin, in der Seitenwand eine Greifnut mit senkrechten oder besser leicht hinterschnittenen Seitenwänden (Schwalbenschwanz-Nut) vorzusehen. In einer solchen Nut findet ein Greifer genügend Halt, insbesondere in der Ausführung mit hinterschnittenen Seitenwänden, bei der ein Formschluss möglich ist.

Die Erfindung gemäß den oben erwähnten Aspekten wird weiter an bevorzugten Ausführungsbeispielen unter Bezugnahme auf die Figuren erläutert.

Es zeigen:
- Figur 1: Isometrische Ansicht eines Bauzylinders einer additiven Fertigungsanlage mit Werkstückträgern;
- Figur 2: Isometrische Ansicht eines Grundträgers für die Fertigungsanlage gemäß Figur 1;

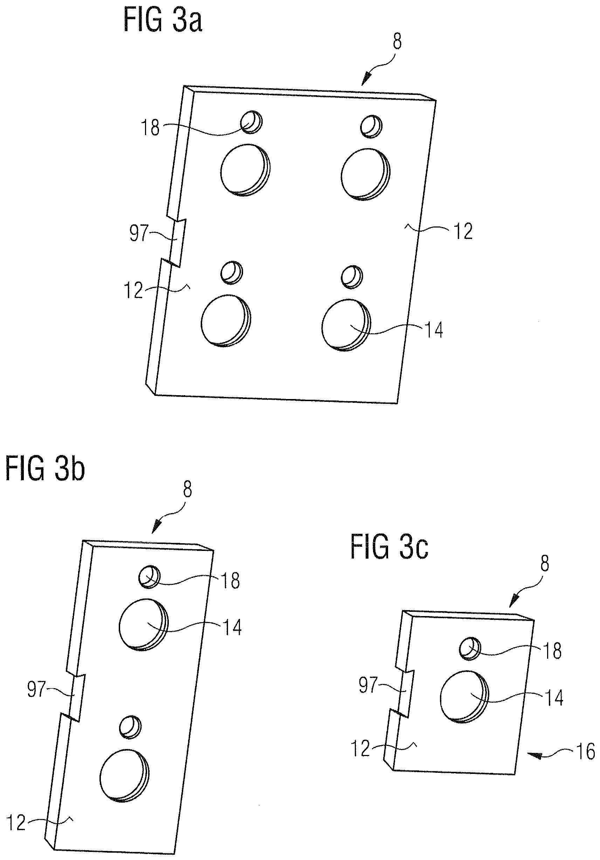

- Figur 3: Isometrische Ansicht von unten auf drei Ausführungsformen (3a, 3b, 3c) von Werkstückträgern der Figur 1;
- Figur 4: Draufsicht auf einen Werkstückträger einer ersten Ausführungsform eines Trägersystems;
- Figur 5: 3D-Ansicht eines "aufgeklappten" Werkstückträgers gemäß Figur 4;
- Figur 6: Schnitt durch eine Anordnung des Werkstückträgers gemäß Figur 5 auf einer Grundplatte;
- Figur 7: Schnitt durch einen Werkstückträger gemäß Figur 3c mit einer zweiten Ausführungsform der Positionierungseinrichtung;
- Figur 8: Isometrische Ansicht von unten auf einen Werkstückträger gemäß Figur 3c mit einer dritten Ausführungsform einer Positionierungseinrichtung;
- Figur 9: Vergrößerte Darstellung von Werkstückträgern auf einer Grundplatte mit Teilschnitt durch eine Positionierungseinrichtung gemäß Figur 8;
- Figur 10: Schnitt durch eine Anordnung eines Werkstückträgers gemäß Figur 4 auf einem Grundträger mit Positionierungszapfen geschnitten und ungeschnitten.

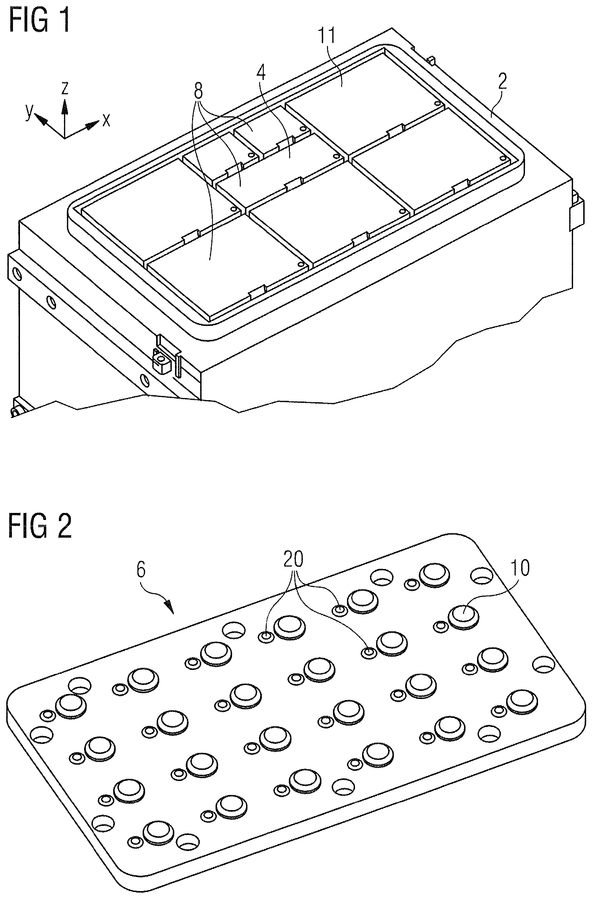

Figur 1 zeigt schematisch eine Ansicht eines Bauzylinders 2 einer Maschine für additive Fertigung mit der darin senkrecht verschiebbaren Bauplattform 4. Insbesondere ist hier an ein Laserschmelzverfahren zu denken, bei dem schichtweise die Bauplattform mit Pulver des Baumaterials beschichtet wird und in jeder neu aufgebrachten Schicht mittels eines Lasers die Strukturen des Werkstücks durch Verschmelzen des Pulvers erzeugt werden.

Die Bauplattform 4 umfasst einen Grundträger oder eine Grundplatte 6 (hier nicht sichtbar, siehe Figur 2), auf dem Werkstückträger 8 oder Paletten 8 angeordnet sind, optimalerweise, wie dargestellt, so, dass die gesamte Fläche des Grundträgers 6 abgedeckt ist. In Anpassung an die Größe der produzierten Werkstücke kommen Paletten 8 in verschiedenen Größen zum Einsatz, da als Leitlinie pro Palette ein Werkstück erzeugt wird, was jedoch das Vorhandensein einer unbenutzten Palette oder das Produzieren mehrerer Werkstücke auf einer Palette nicht ausschließt. Der Grundträger 6 bildet zusammen mit den Paletten 8 ein Trägersystem.

Für die Positionierung der Paletten 8 weist der Grundträger 6 Zapfen 10 auf. An der Unterseite 12 weisen die Paletten 8 Vertiefungen 14 auf, die im Querschnitt wenigstens an einer Umfangslinie komplementär zu den Zapfen 10 ausgebildet sind, so dass die Zapfen 10 mit allenfalls geringem Widerstand, aber jedenfalls mit geringem Spiel bis praktisch spielfrei in die Ausnehmungen 14 gleiten und somit die Paletten 8 genau auf einer Position halten. Die Begriffe "Ausnehmung" und "Vertiefung" werden hierin synonym verwendet und haben im Rahmen dieser Offenbarung denselben Sinngehalt. Bei den kleinsten Paletten 16, die nur eine Ausnehmung 14 aufweisen, ist es vorteilhaft, um nicht zu sagen nötig für eine automatische Bestückung des Grundträgers 6, eine Verdrehsicherung vorzusehen. Vorliegend besteht sie in einer kleineren Verdrehsicherungsausnehmung 18 und dazu passenden Verdrehsicherungsstiften 20 in dem Grundträger 6.

Die Verdrehsicherungsmaßnahmen können dabei auch generell als exzentrisch zu den Zapfen 10 ausgebildete Erhebungen und entsprechende Vertiefungen in der Unterseite der Paletten 8 ausgebildet sein, wie noch erläutert wird. Alternativen dazu sind das Ausbilden der Zapfen 10 in einer anderen als kreissymmetrischen Form, z. B. mit ovalem, elliptischen oder polygonalem Querschnitt oder eine andere, den kreissymmetrischen Querschnitt störende Maßnahme wie z. B. eine radial vorspringende Nase, oder Kombinationen aus den vorgenannten Formen.

Die Paletten 8 gemäß dem vorliegenden Ausführungsbeispiel zeigen wenigstens an der Oberseite 11 ein Material, auf dem mit dem additiven Fertigungsverfahren ein Werkstück erstellt werden kann. Es handelt sich also um ein Material, das zum jeweiligen Baumaterial kompatibel ist. Im Rahmen der Produktion von Werkstücken aus metallischen Pulvern ist ein solches Material z. B. eine Aluminiumlegierung.

Eine weitere Schwierigkeit besteht dabei darin, dass während des Produktionsprozesses erhöhte Temperaturen auftreten. Zum Beispiel wird der Grundträger 6 auf eine Temperatur von beispielsweise 200 °C erwärmt. Dazu kommt, dass durch das Schmelzen des Baumaterials, insbesondere in der Anfangsphase, nahe der Oberfläche 11 durch den Schmelzprozess weiterer Energieeintrag erfolgt, der lokal zu Temperaturerhöhung führt. Durch diese erhöhten Temperaturen treten thermische Ausdehnungseffekte auf. Trotzdem muss jedoch wenigstens die Oberfläche der Palette hohen Anforderungen an die Maßhaltigkeit genügen. Abgesehen von Dimensionsänderungen in der xy-Ebene, also parallel zur Oberseite 11 (siehe Figur 1), sind auch Wölbungen, das heißt mit wandelnder Temperatur Abweichungen von einer exakt planen Oberfläche, und Verschiebungen in der xy-Ebene durch das Auftreten von Spiel um die Zapfen 10 zu vermeiden oder wenigstens auf ein vertretbares Maß zu reduzieren.

xy-Verschiebungen werden reduziert, indem die Ausnehmungen 14 wenigstens in dem Bereich, der für die Positionierung ausschlaggebend ist, aus einem Material mit entsprechend geringer thermischer Ausdehnung bestehen. Bevorzugt ist hierbei Werkzeugstahl, insbesondere auch warmfester Werkzeugstahl im Hinblick auf einen späteren Transfer der Paletten 8 in eine Werkzeugmaschine der spanenden Fertigung oder auch eine thermische Nachbehandlung bei hoher Temperatur wie z. B. heißisostatisches Pressen.

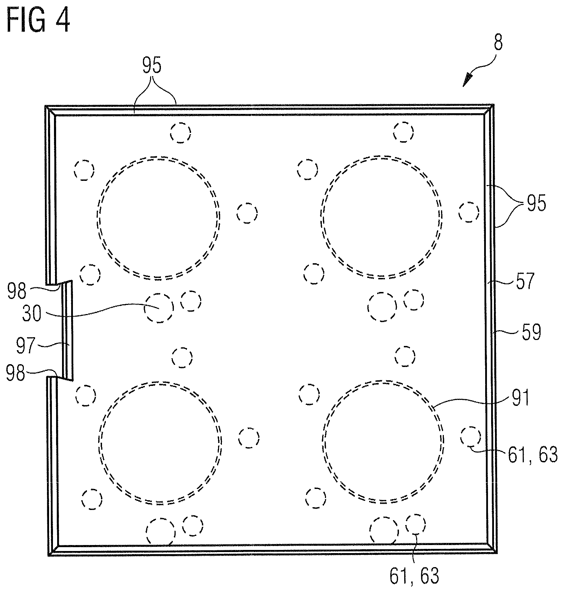

Die Figuren 4-6 zeigen eine erste Ausführungsform des Werkstückträgers 8 (Palette 8), welches in Form eines sandwichartigen Aufbaus bereitgestellt wird, wobei die Palette 8 aus einem Oberteil 57 (hierin auch: "oberes Element 57") und einem Unterteil 59 (hierin auch: "unteres Element 59") zusammengesetzt ist. Das Oberteil 57 besteht aus dem für die additive Fertigung nötigen Material, also einem Material, auf dem ein Werkstück mit dem jeweiligen Verfahren der additiven Fertigung aus dem Baumaterial aufgebaut werden kann. Das Unterteil 59 besteht dagegen aus einem Material hoher Festigkeit und anderer, insbesondere geringerer, thermischer Ausdehnung wie weiter unten auch für die Fassungen 28 und 42 der zweiten und dritten Ausführungsform beschrieben wird. Oberteil 57 und Unterteil 59 werden auf geeignete Art miteinander verbunden. Vorzugsweise erfolgt dies auf eine lösbare Art, z. B. wie gezeigt durch Schrauben 61, die vorzugsweise symmetrisch um die Positionierungsausnehmung 14 herum angeordnet sind. Die Schrauben 61 werden in entsprechende Sacklöcher 63 im Oberteil 57 eingedreht.

Bei dieser Konstruktion wurde beobachtet, dass ein geringerer Temperaturgradient innerhalb des Oberteils 57 auftritt und entsprechend eine geringere Neigung zur Ausbildung einer gewölbten Oberseite auftritt. Ein anderer Faktor, der einer Wölbung entgegensteht, kann auch das Unterteil 59 sein, das als steifes und temperaturstabiles Element dem Ausbilden einer konkaven Wölbung an der Unterseite des Oberteils 57 entgegensteht. Für eine exakte relative Positionierung von Unterteil 59 und Oberteil 57 beim Zusammenbau wird ein erster Positionierungsbolzen 65 im Unterteil 59 vorgeschlagen, der in ein exakt dazu passendes erstes Positionierungsloch 67 im Oberteil 57 eingeführt werden kann. Beabstandet zum Positionierungsbolzen 65 weist das Unterteil 59 einen zweiten Positionierungsbolzen 69 auf, der zum Einführen in ein zweites Positionierungsloch 71 vorgesehen ist. Das Positionierungsloch 71 weist die Besonderheit auf, dass es in Richtung der Verbindungslinie zum ersten Positionierungsloch 67 verlängert ausgeführt ist, also einen ovalen Querschnitt aufweist oder in Form eines Langlochs bereitgestellt ist. Dadurch wird die verschiedene thermische Ausdehnung von Oberteil 57 und Unterteil 59 bei Erwärmung der Palette 8 ausgeglichen, ohne den zweiten Positionierungsbolzen 69 zu belasten. Bei größeren Paletten 8 kann es nötig werden, zusätzliche Positionierungsbolzen und -löcher vorzusehen, die gegenüber der Verbindungslinie erster Positionierungsbolzen 65 - zweiter Positionierungsbolzen 69 seitlich versetzt sind. Für diese sind dann dritte Positionierungslöcher (nicht dargestellt) vorzusehen, die einen größeren Querschnitt aufweisen als die jeweiligen Positionierungsbolzen, um eine Verschiebung in eine beliebige Richtung in der xy-Ebene zu gestatten. Ebenso sind die Löcher 63 für die Schrauben 61 im Unterteil 59 mit einem Übermaß gegenüber dem Schaft der Schrauben 61 ausgeführt, so dass sich die Schraubenköpfe der Schrauben 61 und ihr Schaft im Unterteil 59 entsprechend der relativen thermischen Ausdehnung des Oberteils 57 verschieben können.

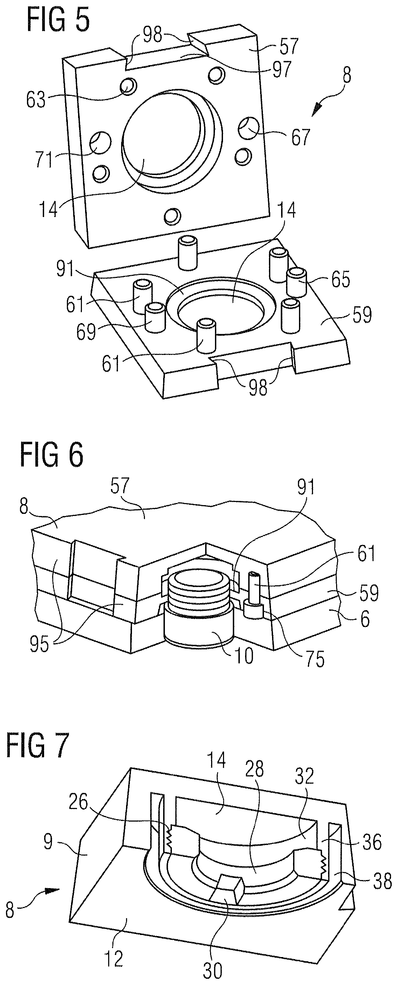

Einen Werkstückträger 8 (Palette 8) einer zweiten Ausführungsform eines Trägersystems zeigt Figur 7. Der Körper 9 der Palette 8 besteht insgesamt aus einem Material, das als Trägermaterial für die additive Fertigung geeignet ist. Der Körper 9 definiert an seiner Oberseite die Oberfläche der Palette 8, auf welcher das Werkstück aufgebaut werden kann. In die Unterseite des Körpers 9 ist eine zylindrische Ausnehmung 32 eingearbeitet, die innen ein Gewinde 26 trägt. In das Gewinde 26 ist eine Fassung 28 aus Werkzeugstahl im Wesentlichen in Form eines Ringes eingedreht. Die Fassung 28 weist eine Verdrehsicherungsausnehmung 30 auf. Vorliegend sind zwei diametral gegenüberliegende Verdrehsicherungsausnehmungen 30 in der Fassung 28 vorhanden, die zum Eingriff eines Schraubenziehers zum Ein- und Ausdrehen der Fassung 28 dienen.

Die Ausnehmung 32, die die Fassung 28 aufnimmt, wird durch eine relativ dünne Zylinderwand 36 begrenzt, die von einer Dehnungsfuge 38 umgeben ist. Die Zylinderwand 36, die auch das Gewinde 26 an der Innenseite trägt, ist dabei nötigenfalls mit einem Untermaß gegenüber dem Umfang der Fassung 28 ausgebildet, um eine gegebenenfalls höhere thermische Ausdehnung des Materials des Körpers 9 des unteren Elements gegenüber dem Material der Fassung 28 unter den Bedingungen der Fertigung auszugleichen. Insbesondere ist das Untermaß derart gewählt, dass bei der höchsten anzunehmenden Temperatur während der additiven Fertigung die Fassung 28 sicher und spielfrei im Gewinde 26 gehalten ist.

Zu beachten bei dieser Lösung ist, dass die Fassung 28 und entsprechend die Gewinde 26 in der Palette 8 für die Fassung mit hoher Präzision ausgeführt sein müssen, da die Fassung 28 und die Verdrehsicherungsausnehmung 30 präzise positioniert sein müssen.

Die Fassung 28 dient während der spanenden Bearbeitung, wo höhere Kräfte auf die Palette 8 einwirken, als Angriffsmittel für die dort üblichen Verankerungen, z. B. Zapfen mit ausfahrbaren Kugeln oder Krallen. Möglich ist auch, die Fassung 28 zu entfernen für Bearbeitungsschritte, bei denen sie stört oder denen sie nicht standhält, z. B. heißisotatisches Pressen

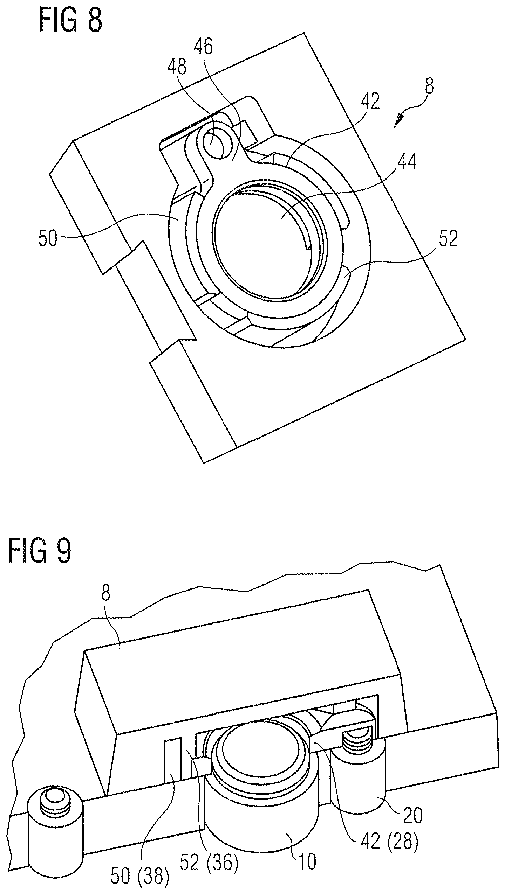

In der dritten Ausführungsform gemäß Figur 8 ist eine Fassung 42 in die Vertiefung 44 in der Palette 8 eingepresst. Die Fassung 42 weist eine Nase 46 auf, in der sich die Verdrehsicherungsausnehmung 48 befindet. Auch hier ist wieder eine Dehnungsfuge 50 vorhanden, um die Spannungen zu verringern, die gegebenenfalls durch verschiedene thermische Ausdehnungskoeffizienten des Körpers der Palette 8 und der Fassung 42 auftreten. Die Wand 52, in die die Fassung 42 eingepresst ist, ist dabei so gestaltet, dass sie auch bei den höchsten vorkommenden Temperaturen die Fassung 42 jedenfalls spielfrei festhält, auch im Fall einer gegenüber der Fassung 42 höheren thermischen Ausdehnung des Körpers der Palette 8.

Wie im obigen zweiten Ausführungsbeispiel geschildert, besteht die Fassung 42 aus wärmefesten Werkzeugstahl und der Körper der Palette 8 aus einem Material, das als Trägermaterial für die additive Fertigung geeignet ist (beispielsweise Aluminium oder eine Aluminiumlegierung).

Bei dieser Ausführung ist zwar die Position der Verdrehsicherungsöffnung 48 vorgegeben, jedoch muss beim Einpressen der Fassung 42 auf eine genaue Positionierung in vertikaler Richtung (z-Richtung) geachtet werden. Damit diese Positionierung auch bei den höchsten auftretenden Temperaturen nicht verloren geht, muss hier zudem eine höhere Vorspannung, das heißt Untermaß der Wand 52 gegenüber der Fassung 42, vorgesehen werden, was das Material einer höheren Belastung aussetzt.

Im Übrigen gelten bezüglich Befestigung bei spanender Nachbearbeitung und Entfernen die oben zur Fassung 28 gegebenen Erläuterungen.

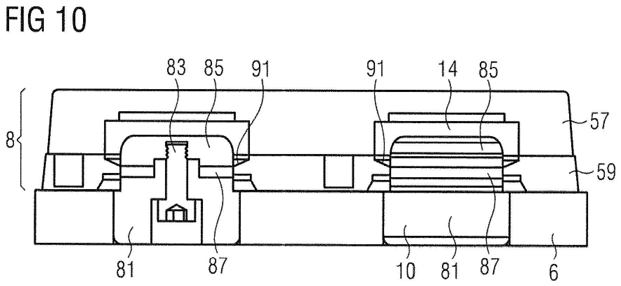

Figur 10 zeigt eine bevorzugte Ausführungsform der Zapfen 10. Genauer gesagt zeigt Figur 10 eine Ausführungsform, wobei ein Werkzeugträger 8 auf einem Grundträger 6 mithilfe von Zapfen 10 und zugehörigen Aussparungen 14 angebracht ist. Bei dem Werkstückträger 8 kann es sich um eine der vorgenannten Ausführungsformen handeln, insbesondere um einen Werkstückträger der ersten Ausführungsform gemäß den Figuren 4-6. Auf einem Zapfenunterteil 81 ist mittels einer Schraube 83 ein Zapfendeckel 85 befestigt. Zwischen Zapfenunterteil 81 und Zapfendeckel 85 ist ein Ring 87 aus einem Material mit höherer thermischer Ausdehnung (größerer Wärmeausdehnungskoeffizient) als das untere Element 59 des Werkstückträgers 8 des ersten Ausführungsbeispiels (wie hier dargestellt) oder die Fassungen 28 bzw. 42 der anderen Ausführungsformen eingeklemmt. Bevorzugt ist hierfür eine Aluminiumlegierung. Der Ring 87 ist insbesondere so angeordnet, dass er genau auf die Fassungen 28 bzw. 42 stößt oder, wie hier dargestellt, auf einen ringförmigen Kragen 91 des unteren Elements 59. Beim Aufsetzen einer Palette 8 auf einen Grundträger 6 gleiten die Zapfen 10 möglichst ohne Spiel, aber noch leichtgängig in die Ausnehmungen 14 der Paletten. Bei Temperaturerhöhungen dehnt sich der Ring 87 stärker aus als das umgebende Material, wodurch die Paletten (Werkstückträger) 8 mit zunehmender Kraft am Grundträger 6 gehalten wird.

Alternativ zu der oben geschilderten Ausführungsform der Zapfen 10 kann ein Material mit höherer thermischer Ausdehnung auch an den Rändern des Lochs vorgesehen sein. Insbesondere kann ein Halterungsabschnitt 28, 42, 91 des Lochs (14) aus einem Material mit höherem Wärmeausdehnungskoeffizient als das Material eines Abschnitts des Zapfens 10 ausgebildet sein. Im Falle der ersten Ausführungsform bedeutet dies, dass der Kragen 91 des Lochs und gegebenenfalls das gesamte untere Element 59 aus dem Material mit höherem Wärmeausdehnungskoeffizient gebildet sind. Im Falle des zweiten und dritten Ausführungsbeispiels bedeutet dies, dass die Fassung 28 bzw. die Fassung 42 aus dem Material mit höherem Wärmeausdehnungskoeffizient gebildet sind. Gemäß dieser Alternative dehnt sich das umgebende Loch 14 bei Erwärmung des Trägersystems in negative radiale Richtung zu dem Zapfen 10 hin aus, sodass die gewünschte Klemmwirkung erzielt wird.

Der Kragen 91 dient auch dem Eingriff einer Haltevorrichtung während nachfolgenden spanenden Bearbeitungsschritten analog zu den Fassungen 28 und 42. Wenn eine Bearbeitung für das Material des Unterteils ungünstig ist, wie z. B. zu hohe Temperaturen, kann das Unterteil entfernt werden.

Gerade bei additiven Fertigungsverfahren, bei denen flächig ein Pulver schichtenweise aufgetragen wird, ist es zu vermeiden, dass sich Hohlräume oder andere Unregelmäßigkeiten in den Schichten bilden. Die Zwischenräume zwischen den Paletten 8 und der Wand des Bauzylinders 2 müssen also sicher gleichmäßig mit dem Baumaterialpulver gefüllt werden. Ein weiterer Effekt besteht in der thermischen Ausdehnung bzw. dem Schrumpfen während des Fertigungsprozesses. Beim Ausdehnen der Paletten 8 muss sichergestellt sein, dass das Baumaterialpulver aus Zwischenräumen, die sich durch diesen Prozess verkleinern, ausweichen kann. Andererseits muss auch im Falle einer Verringerung der Dimension der Paletten sichergestellt sein, dass das Pulver in einer eher dem Fließen einer Flüssigkeit entsprechenden Art die sich wieder vergrößernden Zwischenräume ausfüllen kann, so dass jedenfalls nach dem Aufbringen einer Pulverschicht und deren Glätten sicher ist, dass keine weiteren Verschiebungen oder Bewegungen im Pulver mehr vorkommen, also das System stabil ist.

Um diese Forderungen zu erfüllen, hat sich eine pyramidenstumpfartige Ausbildung der Paletten als geeignet erwiesen. Die Seitenwände der Paletten 8 der Ausführungsbeispiele sind geneigt, so dass sich die Paletten von der Unterseite 12 zur Oberseite 11 hin verjüngen. Damit ergibt sich eine Art Trichterwirkung, die einerseits das Ausweichen des Pulvers bei Verringerung der Zwischenräume zwischen den Paletten bzw. Paletten und Zylinderwand erlaubt und andererseits ein sicheres, widerstandsfreies Nachrutschen im Falle einer Vergrösserung dieser Zwischenräume sicherstellt.

Aus einer anderen Perspektive sind aus dem genannten Grund Hinterschnitte oder Hohlräume zu vermeiden. Insbesondere schließt dies Lücken zwischen Unterseite 12 der Paletten und Oberfläche des Grundträgers 6 aus, um mit einem Greifer unter eine Palette greifen zu können. Die abgeschrägten Seitenwände 95 erschweren zusätzlich das Packen der Paletten. Für einen sicheren Griff wird daher an mindestens einer Seitenwand 95 eine Greifnut 97 angebracht. Ihre Seitenwände 98 sind senkrecht, bevorzugt jedoch leicht hinterschnitten, so dass die Greifnut 97 schwalbenschwanzförmig ist und einen Halt für einen geeigneten Greifer bietet. Wegen der relativ kleinen Dimension der Greifnuten 97, ihrem nahezu senkrechten Verlauf und einem begrenzten Hinterschnitt zur Erzielung der Schwalbenschwanzform stellen sie kein Risiko für eine ungleichmäßige Pulverbeschichtung dar.

Eine Besonderheit insbesondere der Verfahren mit gezieltem Schmelzen von pulverförmigen Material besteht darin, dass beim Entfernen des Werkstücks auch von der Oberfläche des Bauträgers Material abgetragen wird. Bei der ersten Ausführungsform besteht in dieser Hinsicht ein weiterer Vorteil darin, dass das Oberteil 57 einfach ausgewechselt werden kann. Es ist in dieser Hinsicht sogar denkbar, dass das Oberteil 57 kleiner ausgeführt wird, so dass die Greifnut 97 nur im Unterteil 59 aus Werkzeugstahl vorhanden ist. Dadurch ist die Form des Oberteils 57 wesentlich vereinfacht, nämlich ein Pyramidenstumpf mit geraden, ununterbrochenen Seitenwänden.

Denkbar ist in dieser Hinsicht aber auch, den Verlust an Material der Palette 8 an dem Oberteil 57 auf andere Art zu ersetzen, z. B. auch durch einen zwischengeschalteten additiven Fertigungsschritt, mit dem der Materialverlust durch ein Aufwachsen neuen Materials ausgeglichen wird.

In den oben geschilderten Ausführungsbeispielen umfasst der Grundträger 6 mindestens einen Zapfen 10 und der Werkstückträger 8 mindestens ein Loch 14. In alternativen Ausführungsbeispielen können die Zapfen-Loch-Paare jedoch auch umgedreht angeordnet sein, sodass der Grundträger 6 mindestens ein Loch und der Werkstückträger 8 mindestens einen zugehörigen Zapfen aufweist. Die oben geschilderte Klemmwirkung wird in diesen Ausführungsbeispielen auch auf die oben geschilderte Weise erreicht. In den anderen Aspekten stimmen diese Ausführungsbeispiele mit den oben geschilderten Überein. Ferner können auch mehrere Zapfen-Loch-Paare so vorgesehen sein, dass der Grundträger 6 sowohl Zapfen als auch Löcher aufweist und dass der Werkstückträger 8 zugehörige Löcher und Zapfen aufweist.

Zusammengefasst ergeben die angegebenen Paletten (Werkstückträger) 8 zusammen mit dem Grundträger 6 ein Trägersystem, bei dem es möglich ist, ein Werkstück samt Palette zwischen einer Anlage der additiven Fertigung und Anlagen zur anderweitigen Bearbeitung des Werkstücks (Spanen, Wärmebehandlung, Reinigen, Vermessen) auf einfache Art zu transportieren, insbesondere auch mittels eines Roboters. Insgesamt ergibt sich dadurch eine erhebliche Rationalisierungsmöglichkeit. Durch eine geeignete Konstruktion der Paletten wurden negative Auswirkungen, sei es durch thermische Ausdehnungen oder Gefahr ungleichmäßiger Pulverbeschichtung, vermieden. So kann in einem Prozess beispielsweise ein Werkstückträger 8 von einer Anlage (genauer gesagt von einem Grundträger 6 der Anlage) der additiven Fertigung (beispielsweise eine Strahlschmelzanlage zum selektiven Laserschmelzen) automatisiert zu einer Anlage der subtraktiven Bearbeitung des hergestellten Werkstücks transportiert werden. Optional kann in einem Zwischenschritt der Werkstückträger 8 samt Werkstück in einer Anlage zur thermischen Nachbearbeitung positioniert werden.

Mit den hierin beschriebenen Trägersystemen der ersten bis dritten Ausführungsform kann beispielsweise ein Verfahren zum Herstellen eines Werkstücks wie folgt durchgeführt werden. Zunächst wird der Werkstückträger 8 des Trägersystems gemäß einer der Ausführungsformen auf dem Grundträger 6 des Trägersystems in einer Herstellungsvorrichtung der additiven Art angeordnet. Hierbei greift der Zapfen 10 des Grundträgers 6 in das Loch 14 des Werkstückträgers 8 ein, wie in Figur 10 dargestellt. Anschließend wird eine additive Fertigung eines Werkstücks auf dem Werkstückträger 8 durch die Herstellungsvorrichtung durchgeführt. Aufgrund der entstehenden Prozesswärme wird eine Temperatur des Trägersystems während des Herstellungsverfahrens erhöht. Durch thermische Ausdehnung des Abschnitts 87 des Zapfens 10 tritt eine Klemmwirkung zwischen Zapfen 10 und dem umgebenden Loch 14 auf, da das Material des Abschnitts 87 einen größeren Wärmeausdehnungskoeffizient aufweist als das den Abschnitt 87 umgebende Material des Lochs 14 des Werkstückträgers 8. Alternativ tritt durch Ausdehnung des Halterungsabschnitts 28, 42, 91 des Lochs 14 eine Klemmwirkung zwischen Zapfen 10 und dem umgebenden Loch 14 auf, da gemäß der Alternative das Material des Halterungsabschnitts 28, 42, 91 einen größeren Wärmeausdehnungskoeffizienten aufweist als das Material zumindest des Abschnitts 87 des Zapfens 10.

Nach Durchführen der additiven Fertigung kühlt das Trägersystem ab, wobei sich die Klemmwirkung wieder löst. Anschließend wird der Werkstückträger 8 zusammen mit dem darauf gefertigten Werkstück von dem Grundträger 6 gelöst und zu einer Anlage zur subtraktiven Nachbearbeitung des Werkstücks transportiert. Der Werkstückträger 8 wird auf einem Träger der Anlage zur subtraktiven Nachbearbeitung angeordnet, wobei ein Zapfen 10 des Trägers in das Loch 14 des Werkstückträgers 8 eingreift. Alternativ kann das sich auf dem Werkstückträger 8 befindliche Werkstück zwischen der additiven und der subtraktiven Fertigung einen oder mehrere Zwischenfertigungsschritte durchlaufen, wie beispielsweise eine thermische Nachbearbeitung in einer entsprechenden Anlage, welche ebenfalls - ähnlich wie die Anlagen zur additiven und zur subtraktiven Fertigung - einen Grundträger mit entsprechenden Zapfen umfasst.

Beispielhaft seien Wärmebehandlungen angegeben für verschiedene für die additive Fertigung geeignete Materialien und entsprechende Palettenoberflächen:
- Aluminiumlegierung: Wärmebehandlung im Bereich ca. 200 °C bis ca. 500 °C, bevorzugt ca. 400 °C bis ca. 540 °C.
- Titanlegierungen: Wärmebehandlung im Bereich ca. 400 °C bis ca. 995 °C (abhängig vom Legierungstyp), bevorzugt ca. 480 °C bis ca. 730 °C.

Bevorzugt zeichnen sich die Paletten 8 und der Grundträger 6 durch folgende zahlenmäßige Werte aus:
- Schräge der Seitenwände 95: 1°-11°, bevorzugt 3° bis 9°, 5° bis 7°, oder etwa 6°. Größere Winkel führen insbesondere zu einer merklichen Reduktion der Fläche, die für die Fertigung zur Verfügung steht. Kleinere Winkel führen zur Blockierung des Pulvers und generell Wirkungslosigkeit. Insbesondere ist auch bei einem zu kleinen Winkel das Pulver in Zwischenräumen eingeschlossen und weicht nicht mehr nach oben aus, wenn sich diese durch thermische Ausdehnung verkleinern.
- Die Höhe des Oberteils 57 beträgt ¼ bis ¾ der Gesamthöhe einer Palette. Bevorzugt ist jedoch eine Höhe von höchstens der Hälfte der Höhe der Palette.
- Die Seitenwände 98 der Greifnut 97 sind jeweils um 10° bis 40°, bevorzugt 10° bis 20°, weiter bevorzugt 15° bis 20° gegenüber dem Boden der Greifnut 97 geneigt, ein bevorzugter Wert liegt bei etwa 15°. Die Tiefe der Greifnuten kann zwischen 3 mm und 6 mm liegen, ein bevorzugter Wert sind 4 mm. Als extreme Untergrenze kann von 1 mm ausgegangen werden.
- Höhe der Paletten: 25 mm bis 35 mm.
- Härte der Positionierungsteile (Fassungen 28, 42; Unterteil 59; eventuell auch Grundträger 6): ca. 45 bis ca. 68 HRC (Härte Rockwell C), bevorzugt ca. 50 bis ca. 55 HRC.

Aus der vorangehenden Beschreibung von Ausführungsbeispielen sind dem Fachmann Abwandlungen und Ergänzungen zugänglich, ohne den Schutzbereich der Erfindung zu verlassen, der durch die Ansprüche festgelegt ist. Denkbar sind unter anderem:
- Der Grundträger 6 kann mit einem umlaufenden Rand versehen sein, der insbesondere einen Ausgleich zwischen der Bauzylinderwand, die gerundete Ecken aufweist, und den scharfen Ecken der Paletten herstellt und damit Baumaterial einspart, das ansonsten zum Ausfüllen des dadurch bedingten relativ großen Abstandes zwischen Seitenwänden der Paletten und Bauzylinderwand aufgefüllt werden müsste.
- Der Grundträger 6 ist integraler Bestandteil der additiven Fertigungsanlage oder als Adapterplatte ausgebildet und wird auf geeignete Art an einer vorhandenen Bauplattform der additiven Fertigungsanlage angebracht. Denkbar sind in diesem Zusammenhang lösbare oder unlösbare Verbindungen.
- Die Verdrehsicherungsmaßnahmen können entfallen bei Paletten, die mindestens 2 Positionierungsvorkehrungen (Ausnehmungen 14) aufweisen.
- Die Palette 8 weist mehr als eine Greifnut 97 auf, z. B. an mehr als einer Seite, bevorzugt an gegenüberliegenden Seiten, oder mehr als eine Nut 97 an einer Seite. Letzteres kann vorteilhaft bei größeren Paletten sein. Denkbar ist auch, Greifnuten an Ecken der Paletten anzuordnen, das heißt mindestens eine Ecke mit einer Greifnut auszustatten.
- Statt Greifnut ist die inverse Maßnahme vorhanden, nämlich eine Rippe, die zum Palettenkörper konstante Breite oder abnehmende Breite aufweist.
- In den zweiten Positionierungseinrichtungen weist ein Langloch 71 eine um höchstens 0,4 mm grössere Länge als Breite und ein Loch mit grösserem Durchmesser ("drittes Positionierungsloch", zusätzlich oder alternativ zu Langloch 71) einen um höchstens 0,4 mm grösseren Durchmesser als das erste (Positionierungs-) Loch 67 auf.

## Patentansprüche

1. Trägersystem für eine Fertigungsanlage, umfassend:
einen Grundträger (6), welcher dazu eingerichtet ist, in einer Prozesskammer der Fertigungsanlage befestigt zu werden, und welcher mindestens ein Positionierungselement umfasst; und
einen Werkstückträger (8), auf dem nach einem Herstellungsverfahren umfassend schichtweises Auftragen eines pulverförmigen Rohmaterials ein Werkstück herstellbar ist, wobei
der Werkstückträger (8) eine Unterseite (12) und eine der Unterseite (12) im Wesentlichen gegenüberliegende Bauseite als Oberseite (11) aufweist,
der Werkstückträger (8) an seiner Unterseite (12) mindestens eine erste Positionierungseinrichtung zur positionsgenauen, lösbaren Anbringung an dem Grundträger (6) des Trägersystems aufweist,
das mindestens eine Positionierungselement (10) und die mindestens eine erste Positionierungseinrichtung (14) komplementär ausgebildet sind und ein Zapfen-Loch-Paar umfassend einen Zapfen und ein Loch bilden,
mindestens ein Abschnitt (87) des Zapfens aus einem ersten Material mit einem ersten Wärmeausdehnungskoeffizient gebildet ist **dadurch gekennzeichnet, dass** das Loch in einem für die Positionsgenauigkeit maßgebenden Halterungsabschnitt (28, 42, 91) aus einem zweiten Material mit einem zweiten Wärmeausdehnungskoeffizient gebildet ist, und
wobei der zweite Wärmeausdehnungskoeffizient geringer ist als der erste Wärmeausdehnungskoeffizient, sodass bei einer Erhöhung einer Temperatur des Trägersystems während des Herstellungsverfahrens durch Ausdehnung des Abschnitts (87) des Zapfens eine Klemmwirkung zwischen Zapfen und dem umgebenden Loch auftritt, oder
wobei der erste Wärmeausdehnungskoeffizient geringer ist als der zweite Wärmeausdehnungskoeffizient, sodass bei einer Erhöhung einer Temperatur des Trägersystems während des Herstellungsverfahrens durch Ausdehnung des Halterungsabschnitts (28, 42, 91) des Lochs eine Klemmwirkung zwischen Zapfen und dem umgebenden Loch auftritt.

2. Werkstückträger (8) in einem Trägersystem gemäss Anspruch 1, wobei
auf dem Werkstückträger nach einem additiven Herstellungsverfahren umfassend schichtweises Auftragen eines pulverförmigen Rohmaterials ein Werkstück herstellbar ist,
der Werkstückträger (8) eine Unterseite (12) und eine der Unterseite (12) im Wesentlichen gegenüberliegende Bauseite als Oberseite (11) aufweist,
der Werkstückträger (8) an seiner Unterseite (12) mindestens eine der ersten Positionierungseinrichtungen (14) zur positionsgenauen, lösbaren Anbringung an dem Grundträger (6) der Herstellungsvorrichtung aufweist, und
der Werkstückträger (8) ein plattenförmiges oberes Element (57) und ein plattenförmiges unteres Element (59) umfasst,
das obere Element die Oberseite (11) umfasst und das untere Element (59) die Unterseite (12) umfasst, und
das obere Element (57) aus einem anderen Material gebildet ist als das untere Element (59).

3. Werkstückträger gemäß Anspruch 2, wobei das untere Element (59) und das obere Element (57) lösbar miteinander verbunden sind und, optional, miteinander verschraubt sind.

4. Werkstückträger (8) gemäß einem der Ansprüche 2 bis 3, wobei ausgehend von der Oberseite (11) mindestens ¼ der Höhe des Werkstückträgers (8) das obere Element (57) bildet und sich ausgehend von der Unterseite (12) bis höchstens zum oberen Element (57) das untere Element (59) erstreckt, in welchem zumindest ein Teil der ersten Positionierungseinrichtung (14) in Form eines Lochs ausgebildet ist.

5. Werkstückträger (8) gemäß einem der Ansprüche 2 bis 4, wobei das zweite Material wenigstens eine der beiden folgenden Eigenschaften aufweist:
- warmfest bis 550 °C,
- Härte im Bereich von 45 bis 68 HRC (Härte Rockwell C).

6. Werkstückträger (8) gemäß einem der Ansprüche 2 bis 5, wobei zweite Positionierungseinrichtungen (67, 71, 65, 69) am oberen Element (57) und am unteren Element (59) vorhanden sind und komplementär zueinander ausgebildet sind, um das obere Element (57) und das untere Element (59) positionsgenau miteinander befestigen zu können, und die zweiten Positionierungseinrichtungen (67, 71, 65, 69) einen Satz von wenigstens zwei Löchern (67, 71) umfassen mit einem ersten Loch (67) und mindestens einem zweiten Loch (71), wobei das zweite Loch als Langloch ausgeführt ist, so dass ein darin eingeführter Positionierungsbolzen (71) der zweiten Positionierungseinrichtungen in wenigstens eine Richtung verschiebbar ist, um eine thermische Größenänderung des oberen Elements (57) in Bezug auf das untere Element (59) auszugleichen.

7. Werkstückträger (8) gemäß einem der Ansprüche 2 bis 6, wobei die erste Positionierungseinrichtung im Wesentlichen ein Loch (14) ist, der Halterungsabschnitt (28, 42, 91) des Lochs im Wesentlichen einen ringförmigen Teil der Innenwand des Lochs darstellt und, optional, mindestens einen pro Loch eingepressten oder eingeschraubten Ring (28, 42) umfasst.

8. Werkstückträger (8) gemäß Anspruch 7, wobei die erste Positionierungseinrichtung im Wesentlichen ein Loch (14) ist und einen kreisförmigen Querschnitt aufweist und eine zweite, exzentrisch zum Loch (14) angeordnete Vertiefung (18) im Werkstückträger (8) vorhanden ist oder das Loch (14) einen elliptischen, ovalen oder polygonalen Querschnitt aufweist, sodass der Werkstückträger (8) bei Anordnung auf dem Grundträger (6) mit mindestens einem komplementär ausgebildeten Positionierungselement (10) nicht verdrehbar ist.

9. Werkstückträger gemäß Anspruch 8, wobei das untere Element (59) aus dem zweiten Material gebildet ist.

10. Werkstückträger (8) gemäß einem der Ansprüche 2 bis 9, wobei Randflächen (95) des Werkstückträgers (8) zwischen der Unterseite (12) und der Oberseite (11) geneigt sind, sodass sich der Werkstückträger (8) von der Unterseite (12) zur Oberseite (11) hin verjüngt.

11. Werkstückträger (8) gemäß einem der Ansprüche 2 bis 10, wobei mindestens eine Randfläche des Werkstückträgers (8) wenigstens ein Greifmittel in Form einer Nut oder einer Rippe aufweist, bevorzugt in Form einer Nut mit einem schwalbenschwanzförmigen Querschnitt.

12. Herstellungsvorrichtung der additiven Art nach einem Herstellungsverfahren umfassend schichtweises Auftragen eines pulverförmigen Rohmaterials mit einer Baubühne und einem Trägersystem gemäß einem der Ansprüche 1 bis 11, wobei die Baubühne der Herstellungsvorrichtung den Grundträger (6) des Trägersystems umfasst.

13. Herstellungsvorrichtung gemäß Anspruch 12, wobei der Grundträger (6) eine Anordnung von Positionierungselementen umfasst, wobei die Anordnung von Positionierungselementen die Zapfen (10) umfasst und wobei mindestens einer, bevorzugt jeder, der Zapfen (10) entweder einen kreisförmigen Querschnitt und zusätzlich je mindestens einen Verdrehsicherungsstift (20) oder einen elliptischen, ovalen oder polygonalen Querschnitt aufweist, so dass der Werkstückträger (8) bei Anordnung auf dem Grundträger (6) nicht verdrehbar ist.

14. Verfahren zum Herstellen eines Werkstücks, umfassend:
Anordnen des Werkstückträgers (8) des Trägersystems gemäß einem der Ansprüche 1 bis 11
auf dem Grundträger (6) des Trägersystems in einer Herstellungsvorrichtung der additiven Art, wobei das mindestens eine Positionierungselement (10) und die mindestens eine Positionierungseinrichtung (14) komplementär ausgebildet sind und ein Zapfen-Loch-Paar umfassend einen Zapfen und ein Loch bilden und wobei der Zapfen in das Loch eingreift;
Durchführen einer additiven Fertigung eines Werkstücks auf dem Werkstückträger (8) durch die Herstellungsvorrichtung, wobei sich die Temperatur des Trägersystems während des Herstellungsverfahrens erhöht und durch Ausdehnung des Abschnitts (87) des Zapfens oder durch Ausdehnung des Halterungsabschnitts (28, 42, 91) des Lochs eine Klemmwirkung zwischen Zapfen und dem umgebenden Loch auftritt;
Abkühlen des Trägersystems, wobei sich die Klemmwirkung wieder löst;
Lösen des Werkstückträgers (8) zusammen mit dem darauf gefertigten Werkstück von dem Grundträger (6), bevorzugt durch Greifen, mit einem Greifer, des Werkstückträgers (8) an einem Greifmittel (97), welches an einer Randfläche des Werkstückträgers (8) angeordnet ist;
optional das Anordnen des Werkstückträgers (8) auf einem Träger einer Anlage zur thermischen Nachbearbeitung des Werkstücks; und
Anordnen des Werkstückträgers (8) auf einem Träger einer Anlage zur subtraktiven Nachbearbeitung des Werkstücks, wobei ein Positionierungselement (10) des Trägers und die Positionierungseinrichtung (14) des Werkstückträgers (8) ineinander eingreifen.

15. Verfahren nach Anspruch 14, wobei mehrere Werkstückträger (8) nebeneinander auf dem Grundträger (6) der Herstellungsvorrichtung angeordnet werden.

## Claims

1. Support system for a manufacturing system, comprising:
a base support (6) that is arranged to be secured in a process chamber of the manufacturing system and which comprises at least one positioning element; and
a workpiece holder (8) on which a workpiece can be produced according to a manufacturing process including the layered application of a raw material in powder form, wherein
the workpiece holder (8) has a lower side (12) and a building side as its upper side (11) which is located substantially opposite the lower side (12),
on its lower side (12), the workpiece holder (8) has at least one first positioning device for its releasable, positionally accurate attachment to the base support (6) of the support system,
the at least one positioning element (10) and the at least one first positioning device (14) are designed in a complementary manner and form a pin/hole pair comprising a pin and a hole,
at least one section (87) of the pin is made of a first material having a first thermal expansion coefficient, **characterized in that** the hole is made of a second material having a second thermal expansion coefficient in a retaining section (28, 42, 91) that is decisive for the positioning accuracy, and
wherein the second thermal expansion coefficient is lower than the first thermal expansion coefficient such that a clamping effect results between the pin and the surrounding hole in the event of a temperature increase of the support system during the manufacturing process due to the expansion of the section (87) of the pin, or
wherein the first thermal expansion coefficient is lower than the second thermal expansion coefficient such that a clamping effect results between the pin and the surrounding hole in the event of a temperature increase of the support system during the manufacturing process due to the expansion of the retaining section (28, 42, 91) of the hole.

2. Workpiece holder (8) in a support system according to claim 1, wherein
a workpiece can be produced on the workpiece holder according to an additive manufacturing process including the layered application of a raw material in powder form,
the workpiece holder (8) has a lower side (12) and a building side as its upper side (11) which is located substantially opposite the lower side (12),
on its lower side (12), the workpiece holder (8) has at least one of the first positioning devices (14) for its releasable, positionally accurate attachment to the base support (6) of the manufacturing device, and
the workpiece holder (8) comprises a plate-shaped upper element (57) and a plate-shaped lower element (59),
the upper element comprises the upper side (11) and the lower element (59) comprises the lower side (12), and
the upper element (57) is made of a different material than the lower element (59).

3. Workpiece holder according to claim 2, wherein the lower element (59) and the upper element (57) are detachably connected to each other and optionally screwed to each other.

4. Workpiece holder (8) according to one of claims 2 to 3, wherein starting from the upper side (11), at least 1/4 of the height of the workpiece holder (8) forms the upper element (57), and starting from the lower side (12) up to the upper element (57) at most, the lower element (59) extends, in which at least part of the first positioning device (14) is provided in the form of a hole.

5. Workpiece holder (8) according to one of claims 2 to 4, wherein the second material exhibits at least one of the following two properties:
- heat resistant up to 550 °C,
- hardness in the range of 45 to 68 HRC (Rockwell hardness C).

6. Workpiece holder (8) according to one of claims 2 to 5, wherein second positioning devices (67, 71, 65, 69) are provided on the upper element (57) and on the lower element (59) and have a mutually complementary configuration in order to be able to fasten the upper element (57) and the lower element (59) to each other in a positionally accurate manner, and the second positioning devices (67, 71, 65, 69) comprise a set of at least two holes (67, 71) including a first hole (67) and at least one second hole (71), the second hole being shaped as an oblong hole so that a positioning bolt (71) of the second positioning devices inserted therein is displaceable in at least one direction in order to compensate for a thermal dimensional change of the upper element (57) relative to the lower element (59).

7. Workpiece holder (8) according to one of claims 2 to 6, wherein the first positioning device is substantially a hole (14), the retaining section (28, 42, 91) of the hole substantially represents an annular portion of the inner wall of the hole and optionally comprises at least one ring (28, 42) per hole that is pressed in or screwed in.

8. Workpiece holder (8) according to claim 7, wherein the first positioning device is substantially a hole (14) and has a circular cross-section, and a second recess (18) that is arranged eccentrically to the hole (14) is provided in the workpiece holder (8), or the hole (14) has an elliptical, oval, or polygonal cross-section so that the workpiece holder (8), when placed on the base support (6) with at least one positioning element (10) of a complementary configuration, is rotationally locked.

9. Workpiece holder according to claim 8, wherein the lower element (59) is made of the second material.

10. Workpiece holder (8) according to one of claims 2 to 9, wherein lateral surfaces (95) of the workpiece holder (8) between the lower side (12) and the upper side (11) are inclined so that the workpiece holder (8) tapers from the lower side (12) to the upper side (11).

11. Workpiece holder (8) according to one of claims 2 to 10, wherein at least one lateral surface of the workpiece holder (8) has at least one gripping means in the form of a groove or a ridge, preferably in the form of a groove having a dovetail cross-section.

12. Manufacturing device of the additive kind using a manufacturing process including the layered application of a raw material in powder form comprising a building stage and a support system according to one of claims 1 to 11, wherein the building stage of the manufacturing device comprises the base support (6) of the support system.

13. Manufacturing device according to claim 12, wherein the base support (6) comprises an arrangement of positioning elements, wherein the arrangement of positioning elements includes the pins (10) and wherein at least one, preferably all of the pins (10) have either a circular cross-section and additionally each at least one rotational locking pin (20) or an elliptical, oval, or polygonal cross-section so that the workpiece holder (8), when placed on the base support (6), is rotationally locked.

14. Method for producing a workpiece, comprising:
placing the workpiece holder (8) of the support system according to one of claims 1 to 11 on the base support (6) of the support system in a manufacturing device of the additive kind, wherein the at least one positioning element (10) and the at least one positioning device (14) are designed in a complementary manner and form a pin/hole pair comprising a pin and a hole and wherein the pin engages in the hole;
carrying out an additive manufacture of a workpiece on the workpiece holder (8) by means of the manufacturing device, the temperature of the support system increasing during the manufacturing process and a clamping effect resulting between the pin and the surrounding hole due to the expansion of the section (87) of the pin or due to the expansion of the retaining section (28, 42, 91) of the hole;
cooling the support system, whereby the clamping effect is released again;
disengaging the workpiece holder (8) together with the workpiece produced thereon from the base support (6), preferably by means of a gripper, by gripping the workpiece holder (8) at a gripping means (97) arranged on a lateral surface of the workpiece holder (8);
optionally arranging the workpiece holder (8) on a support of an installation for thermal post-processing of the workpiece; and
arranging the workpiece holder (8) on a support of an installation for the subtractive post-processing of the workpiece wherein a positioning element (10) of the support and the positioning device (14) of the workpiece holder (8) engage in each other.

15. Method according to claim 14, wherein a plurality of workpiece holders (8) is arranged side by side on the base support (6) of the manufacturing device.

## Revendications

1. Système de support pour un système de fabrication, comprenant :
un support de base (6) qui est agencé pour être fixé dans une chambre de traitement du système de fabrication et qui comprend au moins un élément de positionnement ; et
un porte-pièce (8) sur lequel une pièce peut être fabriquée selon un procédé de fabrication incluant l'application en couches d'une matière première sous forme de poudre, dans lequel
le porte-pièce (8) a un côté inférieur (12) et un côté de bâtiment en tant que son côté supérieur (11) qui est sensiblement opposé au côté inférieur (12),
sur son côté inférieur (12), le porte-pièce (8) a au moins un premier dispositif de positionnement pour sa fixation amovible, précise en termes de position sur le support de base (6) du système de support,
l'au moins un élément de positionnement (10) et l'au moins un premier dispositif de positionnement (14) sont conçus de manière complémentaire et forment une paire broche/trou comprenant une broche et un trou,
au moins une section (87) de la broche est constituée d'un premier matériau ayant un premier coefficient de dilatation thermique, **caractérisé en ce que** le trou est constitué d'un second matériau ayant un second coefficient de dilatation thermique dans une section de retenue (28, 42, 91) qui est déterminante pour la précision de positionnement, et
dans lequel le second coefficient de dilatation thermique est inférieur au premier coefficient de dilatation thermique de sorte qu'un effet de serrage se produit entre la broche et le trou environnant dans le cas d'une augmentation de température du système de support pendant le procédé de fabrication en raison de la dilatation de la section (87) de la broche, ou
dans lequel le premier coefficient de dilatation thermique est inférieur au second coefficient de dilatation thermique de sorte qu'un effet de serrage se produit entre la broche et le trou environnant dans le cas d'une augmentation de température du système de support pendant le procédé de fabrication en raison de la dilatation de la section de retenue (28, 42, 91) du trou.

2. Porte-pièce (8) dans un système de support selon la revendication 1, dans lequel
une pièce peut être fabriquée sur le porte-pièce selon un procédé de fabrication additif incluant l'application en couches d'une matière première sous forme de poudre,
le porte-pièce (8) a un côté inférieur (12) et un côté de bâtiment en tant que son côté supérieur (11) qui est sensiblement opposé au côté inférieur (12),
sur son côté inférieur (12), le porte-pièce (8) a au moins l'un des premiers dispositifs de positionnement (14) pour sa fixation amovible, précise en termes de position sur le support de base (6) du dispositif de fabrication, et
le porte-pièce (8) comprend un élément supérieur en forme de plaque (57) et un élément inférieur en forme de plaque (59),
l'élément supérieur comprend le côté supérieur (11) et l'élément inférieur (59) comprend le côté inférieur (12), et
l'élément supérieur (57) est constitué d'un autre matériau que l'élément inférieur (59).

3. Porte-pièce selon la revendication 2, dans lequel l'élément inférieur (59) et l'élément supérieur (57) sont reliés de manière détachable l'un à l'autre et facultativement vissés l'un à l'autre.

4. Porte-pièce (8) selon l'une des revendications 2 à 3, dans lequel à partir du côté supérieur (11), au moins 1/4 de la hauteur du porte-pièce (8) forme l'élément supérieur (57), et à partir du côté inférieur (12) jusqu'à l'élément supérieur (57) au maximum, l'élément inférieur (59) s'étend, dans lequel au moins une partie du premier dispositif de positionnement (14) est prévue sous la forme d'un trou.

5. Porte-pièce (8) selon l'une des revendications 2 à 4, dans lequel le deuxième matériau présente au moins l'une des deux propriétés suivantes :
- résistance à la chaleur jusqu'à 550 °C,
- dureté dans la plage de 45 à 68 HRC (dureté Rockwell C).

6. Porte-pièce (8) selon l'une des revendications 2 à 5, dans lequel des deuxièmes dispositifs de positionnement (67, 71, 65, 69) sont prévus sur l'élément supérieur (57) et sur l'élément inférieur (59) et ont une configuration mutuellement complémentaire afin de pouvoir fixer l'élément supérieur (57) et l'élément inférieur (59) l'un à l'autre de manière précise en termes de position, et les deuxièmes dispositifs de positionnement (67, 71, 65, 69) comprennent un ensemble d'au moins deux trous (67, 71) incluant un premier trou (67) et au moins un deuxième trou (71), le deuxième trou étant formé comme un trou oblong de sorte qu'un boulon de positionnement (71) des deuxièmes dispositifs de positionnement insérés dans celui-ci est déplaçable dans au moins une direction afin de compenser une variation dimensionnelle thermique de l'élément supérieur (57) par rapport à l'élément inférieur (59).

7. Porte-pièce (8) selon l'une des revendications 2 à 6, dans lequel le premier dispositif de positionnement est sensiblement un trou (14), la section de retenue (28, 42, 91) du trou représente sensiblement une partie annulaire de la paroi interne du trou et comprend facultativement au moins une bague (28, 42) par trou qui est enfoncée ou vissée.

8. Porte-pièce (8) selon la revendication 7, dans lequel le premier dispositif de positionnement est sensiblement un trou (14) et a une section transversale circulaire, et un deuxième évidement (18) qui est agencé de manière excentrique par rapport au trou (14) est prévu dans le porte-pièce (8), ou le trou (14) a une section transversale elliptique, ovale ou polygonale de sorte que le porte-pièce (8), lorsqu'il est placé sur le support de base (6) avec au moins un élément de positionnement (10) d'une configuration complémentaire, est verrouillé en rotation.

9. Porte-pièce selon la revendication 8, dans lequel l'élément inférieur (59) est constitué du deuxième matériau.

10. Porte-pièce (8) selon l'une des revendications 2 à 9, dans lequel des surfaces latérales (95) du porte-pièce (8) entre le côté inférieur (12) et le côté supérieur (11) sont inclinées de sorte que le porte-pièce (8) se rétrécit du côté inférieur (12) au côté supérieur (11).

11. Porte-pièce (8) selon l'une des revendications 2 à 10, dans lequel au moins une surface latérale du porte-pièce (8) a au moins un moyen de préhension sous la forme d'une rainure ou d'une crête, de préférence sous la forme d'une rainure ayant une section transversale en queue d'aronde.

12. Dispositif de fabrication du type additif utilisant un procédé de fabrication incluant l'application en couches d'une matière première sous forme de poudre comprenant une plateforme de construction et un système de support selon l'une des revendications 1 à 11, dans lequel la plateforme de construction du dispositif de fabrication comprend le support de base (6) du système de support.

13. Dispositif de fabrication selon la revendication 12, dans lequel le support de base (6) comprend un agencement d'éléments de positionnement, dans lequel l'agencement d'éléments de positionnement inclut les broches (10) et dans lequel au moins l'une, de préférence toutes les broches (10) ont soit une section transversale circulaire et en outre chacune au moins une broche de verrouillage en rotation (20) soit une section transversale elliptique, ovale ou polygonale de sorte que le porte-pièce (8), lorsqu'il est placé sur le support de base (6), est verrouillé en rotation.

14. Procédé de fabrication d'une pièce, comprenant :
le placement du porte-pièce (8) du système de support selon l'une des revendications 1 à 11 sur le support de base (6) du système de support dans un dispositif de fabrication du type additif, dans lequel l'au moins un élément de positionnement (10) et l'au moins un dispositif de positionnement (14) sont conçus de manière complémentaire et forment une paire broche/trou comprenant une broche et un trou et dans lequel la broche s'engage dans le trou ;
la réalisation d'une fabrication additive d'une pièce sur le porte-pièce (8) au moyen du dispositif de fabrication, la température du système de support augmentant pendant le procédé de fabrication et un effet de serrage se produisant entre la broche et le trou environnant en raison de la dilatation de la section (87) de la broche ou en raison de la dilatation de la section de retenue (28, 42, 91) du trou ;
le refroidissement du système de support, moyennant quoi l'effet de serrage est à nouveau libéré ;
le désengagement du porte-pièce (8) conjointement avec la pièce fabriquée sur celui-ci du support de base (6), de préférence au moyen d'un dispositif de préhension, en saisissant le porte-pièce (8) au niveau d'un moyen de préhension (97) agencé sur une surface latérale du porte-pièce (8) ;
facultativement l'agencement du porte-pièce (8) sur un support d'une installation pour le post-traitement thermique de la pièce ; et
l'agencement du porte-pièce (8) sur un support d'une installation pour le post-traitement soustractif de la pièce, dans lequel un élément de positionnement (10) du support et le dispositif de positionnement (14) du porte-pièce (8) s'engagent l'un dans l'autre.

15. Procédé selon la revendication 14, dans lequel une pluralité de porte-pièces (8) sont agencés côte à côte sur le support de base (6) du dispositif de fabrication.
